# EUROPÄISCHE PATENTANMELDUNG

(11) **EP 3 056 950 A1**
(43) Veröffentlichungstag der Anmeldung: **17.08.2016**
(21) Anmeldenummer: 15155255.1
(22) Anmeldetag: 16.02.2015
(51) Int. Cl.: G05B 13/02, F02C 9/28, F01K 23/16

(54) **Verfahren zum Betreiben einer Turbinenanlage und Turbinenanlage**

(71) Anmelder: Siemens Aktiengesellschaft, 80333 München (DE)
(72) Erfinder: Schäfer, Marc, 45470 Mülheim an der Ruhr (DE); Wall, Dirk, 45473 Mülheim (DE)

(57) **Zusammenfassung**

Die Erfindung betrifft ein Verfahren zum Betreiben einer Turbinenanlage (4). Damit die Turbinenanlage (4) aufwandsgünstig betrieben werden kann, insbesondere unter Einhaltung einer vorgegebenen Betriebsbedingung, wird vorgeschlagen, dass ein Leistungsregler (44) der Turbinenanlage (4) durch einen weiteren Regler (48) überlagert wird, welcher weitere Regler (48) einen Turbinenanlagen-Betriebspunkt derart einstellt, dass der Turbinenanlagen-Betriebspunkt einer vorgegebenen Bedingung genügt, wobei eine Leistung keine Regelgröße des weiteren Reglers (48) ist.

## Beschreibung

Die Erfindung betrifft ein Verfahren zum Betreiben einer Turbinenanlage. Ferner betrifft die Erfindung eine Turbinenanlage.

Bekanntermaßen wird eine Turbinenanlage mit einem Leistungsregler in einem gewünschten Betriebspunkt betrieben, indem ein Anlagenbediener dem Leistungsregler einen Leistungs-Sollwert vorgibt und der Leistungsregler daraufhin eine Leistung der Turbinenanlage auf den vorgegebenen Leistungs-Sollwert regelt.

Allerdings gibt es spezielle Betriebspunkte, welche aus technischer und/oder wirtschaftlicher Sicht besonders relevant sind, sich aber zum Teil nicht durch eine konstante Leistung beschreiben lassen. Diese Betriebspunkte können insbesondere von gewissen Umgebungsbedingungen und/oder gewissen Betriebsparametern der Turbinenanlage, wie z.B. von einer Umgebungstemperatur und/oder einer Turbinenanlagen-Temperatur, abhängig sein. Eine zu einem solchen Betriebspunkt gehörende Leistung ist daher unter Umständen nicht im Voraus bekannt und kann sich mit der Zeit verändern.

Falls der Anlagenbediener die Turbinenanlage in einem solchen nicht durch eine konstante Leistung zu beschreibenden Betriebspunkt betreiben möchte, muss der Anlagenbediener zunächst einmal durch iteratives Verstellen des Leistungs-Sollwerts den zum gewünschten Betriebspunkt gehörenden Leistungs-Sollwert ermitteln. Ferner muss der Anlagenbediener bei sich verändernden Umgebungsbedingungen und/oder bei sich verändernden Betriebsparametern den Leistungs-Sollwert von Hand anpassen, um die Turbinenanlage im gewünschten Betriebspunkt zu halten. Die Turbinenanlage in einem solchen Betriebspunkt zu betreiben, ist daher mit einem großen Aufwand verbunden.

Eine Aufgabe der Erfindung ist Verfahren zum Betreiben einer Turbinenanlage anzugeben, bei welchem die Turbinenanlage aufwandsgünstig betrieben werden kann, insbesondere unter Einhaltung einer vorgegebenen Betriebsbedingung.

Diese Aufgabe wird erfindungsgemäß gelöst durch ein Verfahren zum Betreiben einer Turbinenanlage, bei dem ein Leistungsregler der Turbinenanlage durch einen weiteren Regler überlagert wird, welcher weitere Regler einen Turbinenanlagen-Betriebspunkt derart einstellt, dass der Turbinenanlagen-Betriebspunkt einer vorgegebenen Bedingung genügt, wobei eine Leistung keine Regelgröße des weiteren Reglers ist.

Vorteilhafte Weiterbildungen des erfindungsgemäßen Verfahrens sind jeweils Gegenstand abhängiger Unteransprüche sowie der nachfolgenden Beschreibung.

Mithilfe des weiteren Reglers kann automatisch ein Turbinenanlagen-Betriebspunkt, welcher einer vorgegebenen Bedingung genügt, eingestellt werden, ohne dass ein Anlagenbetreiber dem Leistungsregler einen Leistungs-Sollwert vorgeben muss und/oder ohne dass der Anlagenbetreiber den Leistungs-Sollwert von Hand anpassen muss. Folglich ermöglicht es der weitere Regler, die Turbinenanlage aufwandsgünstig in einem der vorgegebenen Bedingung genügenden Turbinenanlagen-Betriebspunkt zu betreiben. Insbesondere ermöglicht es der weitere Regler, die Turbinenanlage aufwandsgünstig derart zu betreiben, dass vorgegebene Emissionsrichtlinien eingehalten werden können und/oder dass zugesicherte Regelreserven zur Stabilisierung eines Stromnetzes bereitgestellt werden können.

Außerdem kann dadurch, dass der Turbinenanlagen-Betriebspunkt durch den weiteren Regler eingestellt wird, das Problem vermieden werden, dass sich der Turbinenanlagen-Betriebspunkt weiter von einem gewünschten Betriebspunkt entfernt, falls der Leistungs-Sollwert (manuell) in eine falsche Richtung angepasst wird.

Der Leistungsregler ist zweckmäßigerweise ein Element eines übergeordneten, mehrere Regler umfassenden Regler-Systems. Die einzelnen Regler des Regler-Systems können voneinander unabhängig sein. Vorzugsweise sind die einzelnen Regler des Regler-Systems dazu eingerichtet, jeweils eine eigene Regelgröße zu regeln. Neben dem Leistungsregler kann das Regler-System beispielsweise einen Drehzahlregler, einen Abgastemperaturregler, einen Hochlaufregler, einen sog. IGV-Temperaturregler und/oder einen Verdichteraustrittsdruckverhältnis-Begrenzungsregler umfassen. Der weitere Regler kann ebenfalls ein Element des übergeordneten Regler-Systems sein.

Unter einem Turbinenanlagen-Betriebspunkt kann vorliegend ein (momentaner) Betriebszustand der Turbinenanlagen bzw. ein Betriebspunkt, in welchem die Turbinenanlage (momentan) betrieben wird, verstanden werden. Vorzugsweise ist der Turbinenanlagen-Betriebspunkt als Punkt in einem Kennfeld der Turbinenanlage, beispielsweise in einem Leistungs-Temperatur-Kennfeld, darstellbar. Zweckmäßigerweise ist der Turbinenanlagen-Betriebspunkt durch mindestens zwei Größen definiert, z.B. durch eine Leistung und eine Temperatur. Die Größen, durch welche der Turbinenanlagen-Betriebspunkt definiert ist, können unter anderem von einer Temperatur in einer Turbinenanlagen-Umgebung und/oder von einer Temperatur der Turbinenanlage abhängen.

Als Leistungs-Temperatur-Kennfeld ein Kennfeld aufgefasst werden, in welchem ein Zusammenhang zwischen einer Leistung und einer Temperatur dargestellt ist. Die im Leistungs-Temperatur-Kennfeld dargestellte Leistung kann eine Leistung sein, welche von der Turbinenanlage erzeugt wird (Turbinenleistung). Bei der im Leistungs-Temperatur-Kennfeld dargestellten Temperatur kann es sich z.B. um eine Abgastemperatur, d.h. eine Temperatur eines beim Betrieb der Turbinenanlage erzeugten Abgases, handeln. Insbesondere kann die Abgastemperatur eine sogenannte korrigierte Abgastemperatur sein, welche ihrerseits von einer Temperatur in der Turbinenanlagen-Umgebung abhängig ist. Alternativ kann die Temperatur eine Verdichter-Eintrittstemperatur sein, d.h. eine Temperatur eines Oxidationsmittels, wie z.B. Luft, bei Eintritt in einen Verdichter der Turbinenanlage.

Sinnvollerweise ist die Turbinenleistung eine Regelgröße des Leistungsreglers. Außerdem ist es zweckmäßig, wenn der weitere Regler den Turbinenanlagen-Betriebspunkt dadurch einstellt, dass der weitere Regler eine oder mehrere Regelgrößen regelt.

In bevorzugter Weise ist die Turbinenanlage eine Gasturbinenanlage. Zweckmäßigerweise umfasst die Turbinenanlage einen Verdichter. Der Verdichter wiederum kann eine verstellbare Leitschaufeleinheit aufweisen. Als verstellbare Leitschaufeleinheit kann eine Vorrichtung aufgefasst werden, die mehrere verstellbar gelagerte Leitschaufeln (englisch: variable guide vanes, VGV), insbesondere mehrere Stufen bzw. Reihen verstellbar gelagerter Leitschaufeln, umfasst. Die einzelnen Leitschaufeln können z.B. bezüglich ihrer jeweiligen Längsachse rotierbar gelagert sein.

Zweckmäßigerweise umfasst die Turbinenanlage zudem eine Brennkammer. Weiterhin umfasst die Turbinenanlage sinnvollerweise eine Turbine, insbesondere eine Gasturbine. Ferner ist es zweckmäßig, wenn die Turbinenanlage einen Generator zum Umwandeln mechanischer Energie in elektrische Energie umfasst.

Mithilfe der zuvor erwähnten Leitschaufeleinheit kann ein Oxidationsmittelmassenstrom, welcher der Brennkammer für eine Verbrennung zugeführt wird, beeinflusst werden, insbesondere über eine Stellung der Leitschaufeln (Leitschaufelstellung).

Weiter kann die Turbinenanlage eine Brennstoffleitung umfassen. Die Brennstoffleitung wiederum kann ein Ventil aufweisen, mittels welchem ein Brennstoffmassenstrom, welcher der Brennkammer für eine Verbrennung zugeführt wird, gesteuert werden kann.

Darüber hinaus kann an die (Gas-)Turbinenanlage eine Dampfturbine mechanisch gekoppelt sein/werden. Insbesondere kann die Dampfturbine an die Turbinenanlage angekoppelt werden, wenn die Turbinenleistung einen vorgegebenen Leistungswert überschreitet. Weiterhin kann eine von der Turbinenanlage und der Dampfturbine gemeinsam erzeugte Leistung eine Regelgröße des Leistungsreglers sein.

Unter einer Überlagerung des Leistungsreglers durch den weiteren Regler kann unter anderem verstanden werden, dass eine Stellgröße des weiteren Reglers eine Führungsgröße des Leistungsreglers ist. Der weitere Regler kann also eine Vertrimmung des Leistungsreglers bewirken. Folglich kann der Betriebspunkt vom weiteren Regler in Zusammenwirkung mit dem Leistungsregler eingestellt werden.

Ferner ist es zweckmäßig, wenn der weitere Regler und der Leistungsregler kommunikativ miteinander verbunden sind, beispielsweise über eine Signalleitung.

Insbesondere können der Leistungsregler und der weitere Regler zu einer Kaskadenregelung miteinander verschaltet sein. Der Leistungsregler kann dabei einen inneren Regler der Kaskadenregelung ausbilden. Weiterhin kann der weitere Regler einen äußeren Regler der Kaskadenregelung ausbilden.

Zweckmäßigerweise ist der Brennstoffmassenstrom bzw. eine Stellung des Ventils der Brennstoffleitung eine Stellgröße des Leistungsreglers.

In einer vorteilhaften Ausführung der Erfindung gibt der weitere Regler dem Leistungsregler einen Leistungs-Sollwert vor. Der Leistungsregler wiederum kann den Brennstoffmassenstrom derart steuern, dass die Turbinenleistung auf dem Leistungs-Sollwert oder im Wesentlichen auf dem Leistungs-Sollwert gehalten wird. Zweckmäßigerweise wird der Oxidationsmittelmassenstrom, welcher der Brennkammer zugeführt wird, dabei indirekt auf einen passenden Wert eingestellt, beispielsweise mithilfe eines anderen Reglers, der eine Leitschaufelstellung steuert.

Vorzugsweise ist der weitere Regler dazu eingerichtet, dem Leistungsregler dynamische (zeitlich veränderliche) Soll- bzw. Stellwerte vorzugeben.

Unter einer Überlagerung des Leistungsregler durch den weiteren Regler kann weiterhin verstanden werden, dass der Leistungsregler regelungsinaktiv gehalten wird, während der weitere Regler den Turbinenanlagen-Betriebspunkt einstellt. Als regelungsinaktiver Zustand eines Reglers kann ein Zustand aufgefasst werden, bei dem der Regler keine Größe regelt bzw. keinen Regeleingriff vornimmt. Der weitere Regler kann also gegenüber dem Leistungsregler priorisiert eingesetzt werden.

Vorteilhafterweise wird der weitere Regler regelungsinaktiv gehalten, solange der Turbinenanlagen-Betriebspunkt der vorgegebenen Bedingung genügt. Entsprechend wird der weitere Regler vorzugsweise nur dann aktiviert, wenn der Turbinenanlagen-Betriebspunkt der vorgegebenen Bedingung nicht genügt. Hierdurch kann insbesondere verhindert werden, dass beide Regler gleichzeitig einen Regeleingriff vornehmen.

In bevorzugter Weise regelt der weitere Regler eine Temperatur, insbesondere eine Abgastemperatur, eine Leitschaufelstellung der Leitschaufeleinheit und/oder einen Emissionswert als Regelgröße/-en. Welche Größen bzw. wie viele Größen Regelgrößen des weiteren Reglers sind, hängt sinnvollerweise von der vorgegebenen Bedingung ab.

Unter einem Emissionswert kann vorliegend eine Konzentration eines Stoffs oder einer Stoffgruppe in einem Abgas, welches beim Betrieb der Turbinenanlage erzeugt wird, verstanden werden. Beispielsweise kann der Eimissionswert eine Kohlenmonoxid- und/oder Stickoxid-Konzentration im Abgas sein.

Ferner kann ein Brennstoffmassenstrom bzw. eine Stellung des Ventils der Brennstoffleitung eine Stellgröße des weiteren Reglers sein. Darüber hinaus kann ein Oxidationsmittelstrom bzw. eine Leitschaufelstellung eine Stellgröße des weiteren Reglers sein.

In einer bevorzugten Ausführung der Erfindung ist die vorgegebene Bedingung eine Bedingung bezüglich eines spezifischen Betriebspunkts der Turbinenanlage, insbesondere bezüglich eines Grenzpunkts eines emissionskonformen Bereichs, eines Grenzpunkts eines Brennstoffwechselbereichs, eines Haltepunkts für ein Einkuppeln einer Dampfturbine und/oder eines sogenannten IGV-Eckpunkts. Alternativ oder zusätzlich kann sich die vorgegebene Bedingung auf einen oder mehrere andere spezielle Betriebspunkte beziehen, welche insbesondere durch technisch bedingte Grenzwerte und/oder Sicherheitsvorschriften vorgegebenen sein können.

Sinnvollerweise ist der emissionskonforme Bereich ein Bereich in einem Kennfeld der Turbinenanlage, insbesondere im zuvor erwähnten Leistungs-Temperatur-Kennfeld. Der emissionskonforme Bereich kann z.B. dadurch definiert sein, dass ein Emissionswert der Turbinenanlage eine vorgegebene (zulässige) Emissionswert-Höchstgrenze genau dann nicht überschreitet, wenn der Turbinenanlagen-Betriebspunkt im emissionskonformen Bereich liegt. Der emissionskonforme Bereich kann insbesondere durch eine Leistungsuntergrenze, insbesondere eine temperaturabhängige Leistungsuntergrenze, begrenzt sein.

Ein Grenzpunkt des emissionskonformen Bereichs kann z.B. ein Betriebspunkt sein, in welchem die Turbinenleistung bei einer vorgegebenen Temperatur, insbesondere einer vorgegebenen korrigierten Abgastemperatur, minimal ist.

Als Brennstoffwechselbereich kann ein Bereich in einem Kennfeld der Turbinenanlage, insbesondere im Leistungs-Temperatur-Kennfeld, aufgefasst werden, in welchem der Turbinenanlagen-Betriebspunkt liegen muss, damit ein Brennstoffwechsel durchgeführt werden kann bzw. zulässig ist. Der Brennstoffwechselbereich kann insbesondere durch eine Leistungsobergrenze und eine Leistungsuntergrenze definiert sein.

Ein Grenzpunkt des Brennstoffwechselbereichs kann insbesondere ein Betriebspunkt sein, welcher auf einer oberen oder unteren Leistungsgrenze des Brennstoffwechselbereichs liegt.

Der Haltepunkt für das Einkuppeln der Dampfturbine ist sinnvollerweise derjenige Turbinenanlagen-Betriebspunkt, in welchem das Einkuppeln der Dampfturbine an die Turbinenanlage, insbesondere an eine Welle der Turbinenanlage erfolgt. Vorzugsweise wird die Turbinenanlage im Haltepunkt stationär, insbesondere mit konstanter Leistung, betrieben.

Der IGV-Eckpunkt entspricht zweckmäßigerweise einer Leitschaufelstellung, bei welcher sich der Oxidationsmittelstrom durch ein Verstellen der Leitschaufeln nicht weiter verringern lässt. Weiterhin kann die Turbinenleistung bei einer vorgegebenen Temperatur, insbesondere bei einer vorgegebenen korrigierten Abgastemperatur, im IGV-Eckpunkt minimal sein.

Ferner kann die vorgegebene Bedingung eine Bedingung bezüglich eines Betriebspunkts sein, welcher eine anlagenschonende Betriebsweise der Turbinenanlage ermöglicht. Falls die Turbinenanlage in einen solchen Betriebspunkt betrieben wird, lässt sich ihre Lebensdauer verlängern und/oder lassen sich ihre Wartungsintervalle verlängern.

Der Turbinenanlagen-Betriebspunkt kann der vorgegebenen Bedingung unter anderem dann genügen, wenn der Turbinenanlagen-Betriebspunkt auf einem spezifischen Betriebspunkt der Turbinenanlage gehalten wird. Hierbei kann der Turbinenanlagen-Betriebspunkt gegebenenfalls eine Abweichung (Regelabweichung) zum spezifischen Betriebspunkt aufweisen, welche durch eine Regelgenauigkeit des weiteren Regler bedingt ist.

Außerdem kann der Turbinenanlagen-Betriebspunkt der vorgegebenen Bedingung z.B. dann genügen, wenn der Turbinenanlagen-Betriebspunkt zwischen zwei spezifischen Betriebspunkten der Turbinenanlage gehalten wird.

Ferner kann der Turbinenanlagen-Betriebspunkt der vorgegebenen Bedingung beispielsweise dann genügen, wenn der Turbinenanlagen-Betriebspunkt in einem vorgegebenen Bereich eines Kennfelds der Turbinenanlage, insbesondere des zuvor erwähnten Leistungs-Temperatur-Kennfelds der Turbinenanlage, liegt. Solch ein Bereich kann z.B. der emissionskonforme Bereich oder der Brennstoffwechselbereich sein.

Weiterhin ist es möglich, dass der Turbinenanlagen-Betriebspunkt der vorgegebenen Bedingung beispielsweise dann genügt, wenn der Turbinenanlagen-Betriebspunkt im Kennfeld eine vorbestimmte Position bezüglich eines spezifischen Betriebspunkts der Turbinenanlage aufweist, insbesondere wenn der Turbinenanlagen-Betriebspunkt im Kennfeld oberhalb oder unterhalb des spezifischen Betriebspunkts angeordnet ist.

Vorteilhafterweise ist im weiteren Regler zumindest ein Algorithmus hinterlegt, anhand dessen der Regler ermitteln kann, wie der Turbinenanlagen-Betriebspunkt einzustellen ist, damit der Turbinenanlagen-Betriebspunkt der vorgegebenen Bedingung genügt. Alternativ oder zusätzlich zum Algorithmus kann im weiteren Regler zumindest eine Datentabelle hinterlegt sein, anhand welcher der Regler ermitteln kann, wie der Turbinenanlagen-Betriebspunkt einzustellen ist, damit der Turbinenanlagen-Betriebspunkt der vorgegebenen Bedingung genügt.

Vorzugsweise wird die Bedingung von einem Anlagenbediener vorgegeben, insbesondere mithilfe eines Bediengeräts, wie z.B. eines Computers. Das Bediengerät kann unter anderem ein Bestandteil eines Leitsystems sein und/oder in einem Leitstand angeordnet sein.

Der Anlagenbediener, auch Operator oder Anlagenbetreiber genannt, kann die Bedingung beispielsweise aus einer Liste auswählen, die mehrere Bedingungen umfasst. Auf diese Weise kann das Vorgeben der Bedingung benutzerfreundlich realisiert werden. Zweckmäßigerweise ist diese Liste in einem Datenspeicher hinterlegt. Weiter ist es zweckmäßig, wenn die vom Anlagenbediener ausgewählte Bedingung an den weiteren Regler übermittelt wird, z.B. über eine Signalleitung.

Zwei oder mehr der Bedingungen aus der Liste können sich auf denselben spezifischen Betriebspunkt beziehen. Des Weiteren können sich mindestens zwei der Bedingungen aus der Liste auf unterschiedliche spezifische Betriebspunkte beziehen.

In bevorzugter Weise ist der weitere Regler ein PI-Regler (englisch: proportional-integral controller) oder ein Dreipunkt-Regler.

Eine weitere Aufgabe der Erfindung ist eine Turbinenanlage bereitzustellen, welche aufwandsgünstig betrieben werden kann, insbesondere unter Einhaltung einer vorgegebenen Betriebsbedingung.

Diese Aufgabe wird erfindungsgemäß gelöst durch eine Turbinenanlage mit einem Leistungsregler und einem weiteren Regler, welcher dem Leistungsregler überlagert ist und dazu eingerichtet ist, einen Turbinenanlagen-Betriebspunkt derart einzustellen, dass der Turbinenanlagen-Betriebspunkt einer vorgegebenen Bedingung genügt, wobei eine Leistung keine Regelgröße des weiteren Reglers ist.

Vorzugsweise ist diese Turbinenanlage zur Durchführung des oben beschriebenen Verfahrens eingerichtet. Ferner kann diese Turbinenanlage die zuvor erwähnte, beim oben beschriebenen Verfahren eingesetzte Turbinenanlage sein.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale können jedoch zweckmäßigerweise auch einzeln betrachtet und zu sinnvollen weiteren Kombinationen zusammengefasst werden. Insbesondere sind diese Merkmale jeweils einzeln und in beliebiger geeigneter Kombination mit dem erfindungsgemäßen Verfahren und der erfindungsgemäßen Turbinenanlage kombinierbar. So sind Verfahrensmerkmale, gegenständlich formuliert, auch als Eigenschaft der entsprechenden Vorrichtungseinheit zu sehen und umgekehrt.

Auch wenn in der Beschreibung bzw. in den Patentansprüchen einige Begriffe jeweils im Singular oder in Verbindung mit einem Zahlwort verwendet werden, soll der Umfang der Erfindung für diese Begriffe nicht auf den Singular oder das jeweilige Zahlwort eingeschränkt sein. Ferner sind die Wörter "ein" bzw. "eine" nicht als Zahlwörter, sondern als unbestimmte Artikel zu verstehen.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Zeichnungen näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und mit einem beliebigen der Ansprüche kombiniert werden.

Es zeigen:
- FIG 1: eine schematische Darstellung eines GuD-Kraftwerks, welches eine Gasturbinenanlage mit einem Leistungsregler und einem weiteren Regler umfasst;
- FIG 2: ein exemplarisches Leistungs-Temperatur-Kennfeld der Gasturbinenanlage; und
- FIG 3: eine schematische Darstellung eines weiteren GuD-Kraftwerks, welches eine Gasturbinenanlage mit einem Leistungsregler und einem weiteren Regler umfasst.

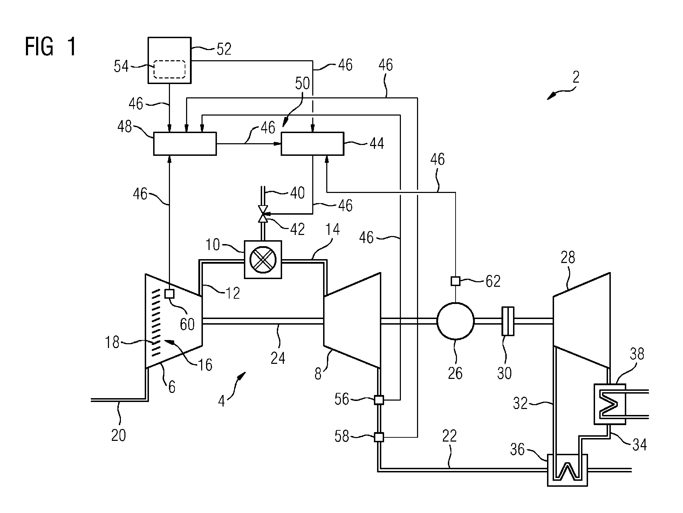

FIG 1 zeigt ein GuD-Kraftwerk 2 (Gas-und-Dampf-Kombikraftwerk) in einer schematischen Darstellung. Das GuD-Kraftwerk 2 umfasst unter anderem eine Turbinenanlage 4, bei welcher es sich im vorliegenden Ausführungsbeispiel um eine Gasturbinenanlage handelt.

Die Turbinenanlage 4 wiederum umfasst einen Verdichter 6, eine Gasturbine 8 sowie eine Brennkammer 10, wobei die Brennkammer 10 über eine erste Verbindungsleitung 12 mit dem Verdichter 6 verbunden ist und über eine zweite Verbindungsleitung 14 mit der Gasturbine 8 verbunden ist.

Weiterhin weist der Verdichter 6 eine Leitschaufeleinheit 16 mit verstellbaren Leitschaufeln 18 und einem figürlich nicht dargestellten Stellmotor zum Verstellen einer Leitschaufelstellung auf. Zudem ist der Verdichter 6 mit einer Oxidationsmittel-Einlassleitung 20 verbunden. Die Gasturbine 8 hingegen ist mit einer Abgas-Auslassleitung 22 verbunden. Des Weiteren sind der Verdichter 6 und die Gasturbine 8 durch eine Welle 24 miteinander verbunden, mittels welcher Welle 24 beim Betrieb der Turbinenanlage 4 ein Generator 26 des GuD-Kraftwerks 2 angetrieben wird.

Darüber hinaus umfasst das GuD-Kraftwerk 2 eine Dampfturbine 28, die mittels einer Kupplungsvorrichtung 30 an die Turbinenanlage 4, insbesondere an die zuvor erwähnte Welle 24, ankuppelbar ist. Die Dampfturbine 28 ist über eine Dampfturbinen-Eingangsleitung 32 und eine Dampfturbinen-Ausgangsleitung 34 mit einem ersten Wärmetauscher 36 verbunden, welcher thermisch an die Abgas-Auslassleitung 22 gekoppelt ist. Außerdem ist ein zweiter Wärmetauscher 38 thermisch an die Dampfturbinen-Ausgangsleitung 34 gekoppelt.

Ferner ist die Brennkammer 10 mit einer Brennstoffleitung 40 verbunden, welche ein Ventil 42 aufweist. Dieses Ventil 42 ist zum Steuern eines Brennstoffmassenstroms, welcher der Brennkammer 10 zugeführt wird, vorgesehen.

Des Weiteren umfasst die Turbinenanlage 4 einen Leistungsregler 44 zum Regeln einer von der Turbinenanlage erzeugten Leistung (Turbinenleistung). Der Leistungsregler 44 ist mit dem Ventil 42 über eine Signalleitung 46 kommunikativ verbunden. Zudem ist der Leistungsregler 44 dazu eingerichtet, eine Ventilstellung des Ventils 42 - und somit den Brennstoffmassenstrom - zu steuern.

Außerdem umfasst die Turbinenanlage 4 einen weiteren Regler 48, welcher über eine Signalleitung 46 mit dem Leistungsregler 44 verbunden ist. Der weitere Regler 48 kann z.B. als PI-Regler oder als Dreipunkt-Regler ausgestaltet sein. Im vorliegenden Ausführungsbeispiel sind der Leistungsregler 44 und der weitere Regler 48 zu einer Kaskadenregelung 50 miteinander verschaltet sind, wobei der Leistungsregler 44 einen inneren Regler der Kaskadenregelung 50 ausbildet und der weitere Regler 48 einen äußeren Regler der Kaskadenregelung 50 ausbildet.

Darüber hinaus umfasst die Turbinenanlage 4 ein Bediengerät 52, welches einen Datenspeicher 54 aufweist sowie mit dem Leistungsregler 44 und mit dem weiteren Regler 48 jeweils über eine Signalleitung 46 kommunikativ verbunden ist.

Ferner umfasst die Turbinenanlage 4 eine Abgastemperatur-Messvorrichtung 56, eine Emissionswert-Messvorrichtung 58 sowie eine Leitschaufelstellungs-Messvorrichtung 60, wobei diese Messvorrichtungen jeweils über eine Signalleitung 46 kommunikativ mit dem weiteren Regler 48 verbunden sind. Außerdem ist die Turbinenanlage 4 mit einer Leistungs-Messvorrichtung 62 ausgestattet, welche über eine Signalleitung 46 kommunikativ mit dem Leistungsregler 44 verbunden ist.

Der prinzipielle GuD-Prozess, bei dem das GuD-Kraftwerk 2 eine elektrische Leistung erzeugt, ist dem Fachmann hinlänglich bekannt und wird daher an dieser Stelle nicht beschrieben.

Beim Betrieb der Turbinenanlage 4 wählt ein Anlagenbediener aus einer Liste, die im Datenspeicher 54 des Bediengeräts 52 hinterlegt ist und mehrere Bedingungen umfasst, eine Bedingung bezüglich eines oder mehrerer spezifischer Betriebspunkte der Turbinenanlage 4 aus. Diese vom Anlagenbediener ausgewählte Bedingung wird über eine Signalleitung 46 an den weiteren Regler 48 übermittelt.

Solange ein momentaner Betriebspunkt der Turbinenanlage 4 (Turbinenanlagen-Betriebspunkt) der vom Anlagenbediener vorgegebenen Bedingung genügt, wird der weitere Regler 48 regelungsinaktiv gehalten. In diesem Fall wird die Turbinenleistung durch den Leistungsregler 44 auf einen zuvor vom Anlagenbediener über das Bediengerät 52 vorgegebenen Leistungs-Sollwert geregelt. Hierbei steuert der Leistungsregler 44 das Ventil 42 und/oder Leitschaufeleinheit 16 derart an, dass die Turbinenleistung auf dem vorgegeben Leistungs-Sollwert gehalten wird. Zum Zwecke der Ermittlung einer momentanen Regelabweichung der Leistung vom Leistungs-Sollwert erfasst die Leistungs-Messvorrichtung 62 einen Leistungs-Istwert und übermittelt diesen an den Leistungsregler 44.

Falls der Turbinenanlagen-Betriebspunkt der vom Anlagenbediener vorgegebenen Bedingung nicht (mehr) genügt, wird vom weiteren Regler 48 eine Regelgröße geregelt. Weiterhin wird eine Stellgröße des weiteren Reglers 48 als Führungsgröße des Leistungsreglers 46 verwendet.

Im vorliegenden Ausführungseispiel gibt der weitere Regler 48 dem Leistungsregler 44 einen Leistungs-Sollwert vor, auf welchen der Leistungsregler 44 die Turbinenleistung zu regeln hat. Auf diese Weise stellt der weitere Regler 48 den Turbinenanlagen-Betriebspunkt derart ein, dass der Turbinenanlagen-Betriebspunkt der vorgegebenen Bedingung (wieder) genügt.

Welche Größe als Regelgröße des weiteren Reglers 48 verwendet wird, hängt von der vorgegeben Bedingung ab. Beim vorliegenden GuD-Kraftwerk 2 kann der weitere Regler 48 - durch Einstellen des Leistungs-Sollwerts - eine Abgastemperatur, eine Leitschaufelstellung der Leitschaufeleinheit 16 oder einen Emissionswert als Regelgröße regeln. Denn die Turbinenanlage 4 ist mit entsprechenden Messvorrichtungen 56, 58, 60 (siehe oben) zur Erfassung von Ist-Werten dieser Größen ausgestattet.

Welchen Wert der weitere Regler 48 dem Leistungsregler 44 als Leistungs-Sollwert vorgibt, hängt davon ab, wie groß eine momentane Regelabweichung der Regelgröße des weiteren Reglers 48 von ihrem Sollwert ist. Zur Berechnung des Leistungs-Sollwerts in Abhängigkeit von der Regelabweichung ist im weiteren Regler 48 ein entsprechender Berechnungs-Algorithmus hinterlegt.

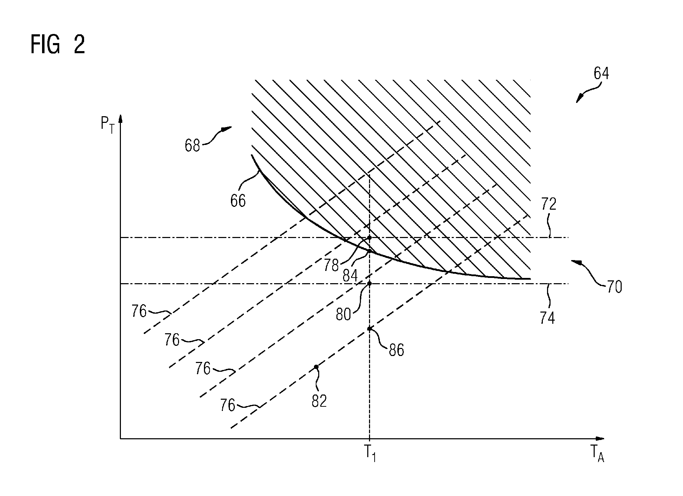

FIG 2 zeigt ein exemplarisches Leistungs-Temperatur-Kennfeld 64 der Gasturbinenanlage 4. Im vorliegenden Kennfeld 64 bildet die Turbinenleistung P_{T} eine Ordinate des Kennfelds 64 und eine sogenannte korrigierte Abgastemperatur T_{A} bildet eine Abszisse des Kennfelds 64.

Im Kennfeld 64 ist ein Abschnitt eines durch eine Leistungsuntergrenze 66 beschränkten emissionskonformen Bereichs 68 der Turbinenanlage 4 dargestellt. Ferner ist im Kennfeld 64 ein Brennstoffwechselbereich 70 dargestellt, welcher durch eine Leistungsobergrenze 72 und eine Leistungsuntergrenze 74 definiert ist.

Außerdem sind im Kennfeld 64 vier Kennlinien 76 abgebildet, welche jeweils eine Abhängigkeit der Turbinenleistung P_{T} von der korrigierten Abgastemperatur T_{A} bei konstanter Leitschaufelstellung wiedergeben. Die zeichnungsgemäß oberste dieser Kennlinien 76 entspricht einer Leitschaufelstellung, bei der die Leitschaufeln 18 maximal geöffnet sind (maximaler Oxidationsmittelstrom). Wohingegen die zeichnungsgemäß unterste dieser Kennlinien 76 einer Leitschaufelstellung entspricht, bei welcher die Leitschaufeln 18 minimal geöffnet sind (minimaler Oxidationsmittelstrom). Die zwischen diesen beiden Kennlinien 76 liegenden Kennlinien 76 entsprechen Zwischenstellungen der Leitschaufeln 18.

Weiterhin sind exemplarisch ein oberer Grenzpunkt 78 des Brennstoffwechselbereich 70, ein unterer Grenzpunkt 80 des Brennstoffwechselbereich 70 sowie ein sogenannter Haltepunkt 82 für ein Einkuppeln der Dampfturbine 28 abgebildet, wobei diese Punkte spezifische Betriebspunkte der Turbinenanlage 4 bilden. Als weitere spezifische Betriebspunkte der Turbinenanlage 4 sind ein temperaturabhängiger Grenzpunkt 84 des emissionskonformen Bereichs 68 und ein temperaturabhängiger IGV-Eckpunkt 86 bei einer vorgegebenen korrigierten Abgastemperatur T₁ abgebildet.

Die Bedingung, die der Anlagenbediener vorgibt, kann sich z.B. auf den Grenzpunkt 84 des emissionskonformen Bereichs 68, einen der Grenzpunkte 78, 80 des Brennstoffwechselbereichs 70, den Haltepunk 82 den IGV-Eckpunkt 86 oder auf mehrere dieser Betriebspunkte beziehen. Alternativ oder zusätzlich kann sich die Bedingung, die der Anlagenbediener vorgibt, auf einen oder mehrere andere spezielle Betriebspunkte beziehen.

Möchte der Anlagenbediener die Turbinenanlage 4 unter Einhaltung von Emissionsrichtlinien betreiben, kann der Anlagenbediener eine Bedingung auswählen, bei welcher der Turbinenanlagen-Betriebspunkt der vorgegebenen Bedingung dann genügt, wenn der Turbinenanlagen-Betriebspunkt im emissionskonformen Bereich 68 des Kennfelds 64 liegt.

Falls der Anlagenbediener die Turbinenanlage 4 bei der vorgegebenen korrigierten Abgastemperatur T₁ unter Einhaltung von Emissionsrichtlinien sowie mit minimaler Turbinenleistung P_{T} betreiben möchte, kann der Anlagenbediener eine Bedingung auswählen, bei welcher der Turbinenanlagen-Betriebspunkt der vorgegebenen Bedingung dann genügt, wenn der Turbinenanlagen-Betriebspunkt auf dem Grenzpunkt 84 des emissionskonformen Bereichs 68 gehalten wird.

Ist beispielsweise bei der vorgegebenen korrigierten Abgastemperatur T₁ ein Brennstoffwechsel erforderlich, kann der Anlagenbediener eine Bedingung auswählen, bei welcher der Turbinenanlagen-Betriebspunkt der vorgegebenen Bedingung dann genügt, wenn der Turbinenanlagen-Betriebspunkt zwischen dem oberen Grenzpunkt 78 und dem unteren Grenzpunkt 80 des Brennstoffwechselbereichs 70 gehalten wird.

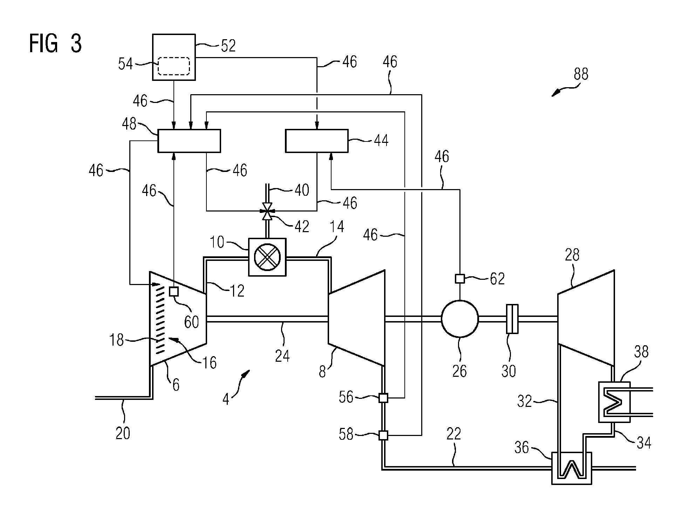

FIG 3 zeigt ein weiteres GuD-Kraftwerk 88 in einer schematischen Darstellung.

Die nachfolgende Beschreibung beschränkt sich im Wesentlichen auf die Unterschiede zum vorausgegangenen Ausführungsbeispiel, auf das bezüglich gleich bleibender Merkmale und Funktionen verwiesen wird. Im Wesentlichen gleiche bzw. einander entsprechende Elemente sind grundsätzlich mit den gleichen Bezugszeichen bezeichnet und nicht erwähnte Merkmale sind im folgenden Ausführungsbeispiel übernommen, ohne dass sie erneut beschrieben sind.

Das weitere GuD-Kraftwerk 88 unterscheidet sich vom GuD-Kraftwerk 2 aus FIG 1 dadurch, dass beim weiteren GuD-Kraftwerk 88 der Leistungsregler 44 und der weitere Regler 48 voneinander unabhängig sind, da die beiden Regler 44, 48 nicht über eine Signalleitung miteinander verbunden sind und folglich auch nicht zu einer Kaskadenregelung verschaltet sind.

Beim weiteren GuD-Kraftwerk 88 kann der weitere Regler 48 seine Regelgröße selbst, d.h. ohne Verwendung des Leistungsreglers 44, regeln. Zu diesem Zweck ist der weitere Regler 48 mit dem Ventil 42 der Brennstoffleitung 40 und mit der Leitschaufelstelleinheit 16 jeweils über eine Signalleitung 46 kommunikativ verbunden. Zudem ist der weitere Regler 48 dazu eingerichtet, eine Leitschaufelstellung der Leitschaufeleinheit 16 sowie eine Ventilstellung des Ventils 42 zu steuern.

Weiterhin wird im vorliegenden Ausführungsbeispiel der Leistungsregler 44 regelungsinaktiv gehalten, während der weitere Regler 48 den Turbinenanlagen-Betriebspunkt einstellt.

Obwohl die Erfindung im Detail durch die bevorzugten Ausführungsbeispiele näher illustriert und beschrieben wurde, ist die Erfindung nicht durch die offenbarten Beispiele eingeschränkt und andere Variationen können hieraus abgeleitet werden, ohne den Schutzumfang der Erfindung zu verlassen.

## Patentansprüche

1. Verfahren zum Betreiben einer Turbinenanlage (4), bei dem ein Leistungsregler (44) der Turbinenanlage (4) durch einen weiteren Regler (48) überlagert wird, welcher weitere Regler (48) einen Turbinenanlagen-Betriebspunkt derart einstellt, dass der Turbinenanlagen-Betriebspunkt einer vorgegebenen Bedingung genügt, wobei eine Leistung keine Regelgröße des weiteren Reglers (48) ist.

2. Verfahren nach Anspruch 1,
**dadurch gekennzeichnet, dass** die Turbinenanlage (4) eine Gasturbinenanlage ist und die Turbinenanlage (4) einen Verdichter (6) mit einer verstellbaren Leitschaufeleinheit (16), eine Brennkammer (10) sowie eine Gasturbine (8) umfasst.

3. Verfahren nach Anspruch 1 oder 2,
**dadurch gekennzeichnet, dass** eine Stellgröße des weiteren Reglers (48) eine Führungsgröße des Leistungsreglers (44) ist.

4. Verfahren nach einem der vorhergehenden Ansprüche,
**dadurch gekennzeichnet, dass** der Leistungsregler (44) und der weitere Regler (48) zu einer Kaskadenregelung (50) miteinander verschaltet sind, wobei der Leistungsregler (44) einen inneren Regler der Kaskadenregelung (50) ausbildet und der weitere Regler (48) einen äußeren Regler der Kaskadenregelung (50) ausbildet.

5. Verfahren nach einem der vorhergehenden Ansprüche,
**dadurch gekennzeichnet, dass** der weitere Regler (48) dem Leistungsregler (44) einen Leistungs-Sollwert vorgibt.

6. Verfahren nach einem der vorhergehenden Ansprüche,
**dadurch gekennzeichnet, dass** der Leistungsregler (44) regelungsinaktiv gehalten wird, während der weitere Regler (48) den Turbinenanlagen-Betriebspunkt einstellt.

7. Verfahren nach einem der vorhergehenden Ansprüche,
**dadurch gekennzeichnet, dass** der weitere Regler (48) regelungsinaktiv gehalten wird, solange der Turbinenanlagen-Betriebspunkt der vorgegebenen Bedingung genügt.

8. Verfahren nach einem der vorhergehenden Ansprüche,
**dadurch gekennzeichnet, dass** der weitere Regler (48) eine Temperatur, insbesondere eine Abgastemperatur, eine Leitschaufelstellung einer Leitschaufeleinheit (16) und/oder einen Emissionswert als Regelgröße/-en regelt.

9. Verfahren nach einem der vorhergehenden Ansprüche,
**dadurch gekennzeichnet, dass** die vorgegebene Bedingung eine Bedingung bezüglich eines spezifischen Betriebspunkts (78, 80, 82, 84, 86) der Turbinenanlage (4), insbesondere bezüglich eines Grenzpunkts (84) eines emissionskonformen Bereichs (68), eines Grenzpunkts (78, 80) eines Brennstoffwechselbereichs (70), eines Haltepunkts (82) für ein Einkuppeln einer Dampfturbine (28) und/oder eines IGV-Eckpunkts (86), ist.

10. Verfahren nach einem der vorhergehenden Ansprüche,
**dadurch gekennzeichnet, dass** der Turbinenanlagen-Betriebspunkt der vorgegebenen Bedingung dann genügt, wenn der Turbinenanlagen-Betriebspunkt auf einem spezifischen Betriebspunkt (78, 80, 82, 84, 86) der Turbinenanlage (4) gehalten wird.

11. Verfahren nach einem der vorhergehenden Ansprüche,
**dadurch gekennzeichnet, dass** der Turbinenanlagen-Betriebspunkt der vorgegebenen Bedingung dann genügt, wenn der Turbinenanlagen-Betriebspunkt zwischen zwei spezifischen Betriebspunkten (78, 80, 82, 84, 86) der Turbinenanlage (4) gehalten wird.

12. Verfahren nach einem der vorhergehenden Ansprüche,
**dadurch gekennzeichnet, dass** der Turbinenanlagen-Betriebspunkt der vorgegebenen Bedingung dann genügt, wenn der Turbinenanlagen-Betriebspunkt in einem vorgegebenen Bereich (68, 70) eines Kennfelds (64) der Turbinenanlage (4) liegt.

13. Verfahren nach einem der vorhergehenden Ansprüche,
**dadurch gekennzeichnet, dass** die Bedingung von einem Anlagenbediener mithilfe eines Bediengeräts (52) vorgegeben wird, wobei der Anlagenbediener die Bedingung aus einer in einem Datenspeicher (54) hinterlegten Liste auswählt, die mehrere Bedingungen umfasst.

14. Verfahren nach einem der vorhergehenden Ansprüche,
**dadurch gekennzeichnet, dass** der weitere Regler (48) ein PI-Regler oder ein Dreipunkt-Regler ist.

15. Turbinenanlage (4) mit einem Leistungsregler (44) und einem weiteren Regler (48), welcher dem Leistungsregler (44) überlagert ist und dazu eingerichtet ist, einen Turbinenanlagen-Betriebspunkt derart einzustellen, dass der Turbinenanlagen-Betriebspunkt einer vorgegebenen Bedingung genügt, wobei eine Leistung keine Regelgröße des weiteren Reglers (48) ist.
